# EUROPEAN PATENT SPECIFICATION

(11) **EP 2 747 390 B1**
(45) Date of publication and mention of the grant of the patent: **27.06.2018**
(21) Application number: 12199126.9
(22) Date of filing: 21.12.2012
(51) Int. Cl.: H04L 12/58, H04M 1/725, H04M 1/64, H04M 1/663

(54) **Method, system and communication device for handling communications**
Verfahren, System und Kommunikationsvorrichtung zum Handhaben von Kommunikationen
Procédé, système et dispositif de communication pour gérer des communications

(43) Date of publication of application: 25.06.2014
(73) Proprietor: BlackBerry Limited, Waterloo, ON N2K 0A7 (CA)
(72) Inventor: Seaman, Conrad, Delbert, Waterloo, Ontario N2L 3W8 (CA)
(74) Representative: MERH-IP Matias Erny Reichl Hoffmann Patentanwälte PartG mbB

(56) References cited:
- EP-A1- 1 858 239
- WO-A1-00/78086
- JP-A- H0 354 987
- US-A1- 2012 094 718

## Description

### FIELD

The specification relates generally to communication devices, and specifically to a method, system and communication device for generating notification signals.

### BACKGROUND

Many communication devices, such as smartphones, are capable of a variety of modes of communication. For example, a single given device may be able to send and receive emails, various types of instant messages, text (i.e. SMS) messages, voice calls (both PSTN/PLMN and VoIP), social network application messages, and so on. In addition, certain modes of communication may be better suited to certain circumstances, The selection of an appropriate mode of communication for handling incoming and outgoing communications can lead to Inefficient use of device resources.

EP 1 858 239 A1 discloses a mobile terminal, wherein, if an event signal is detected, a corresponding list stored on the device is consulted and, according to the data read from the list, an application is launched.

WO00/78086A1 discloses a method and apparatus for rejecting a request for call initialization, a device capable of multi-mode communications, A user of the multi-mode wireless communication device enters one or more desired communication modes into the wireless communication device, where an indication of the selected mode(s) are stored in a memory. When a page message is received by the wireless communication device, it is examined to determine if a communication mode of an incoming call associated with the page message matches the Indication of the selected communication mode(s) as stored in the memory. If a match Is determined, the incoming call is accepted by the wireless communication device. If the communication mode of the incoming call does not match the indication of the selected communication mode(s), the call is rejected by the wireless communication device without Interrupting the user or a call already in progress.

### GENERAL

The present invention provides a method according to claim 1 of the appended claims.

The invention further provides a mobile communication device according to claim 4 of the appended claims.

The invention further provides a non-transitory computer readable medium according to claim 7 of the appended claims.

According to an aspect of the specification, a method is provided in a communication device having a processor, a network interface, and a memory, The method comprises: storing, in the memory, communication handling preferences including a plurality of criteria and, for each criterion, a corresponding indication of acceptable modes of communication; receiving an Incoming communication at the processor via the network interface; selecting, at the processor, one of the criteria based on a context of the communication device; determining, at the processor, if a mode of the incoming communication matches the one or more indication; when the determination is affirmative, allowing the incoming communication; and when the determination is negative, suppressing the communication and transmitting a message to an originator of the incoming communication, identifying an acceptable mode of communication.

According to another aspect of the specification, a non-transitory computer readable medium is provided storing computer readable instructions executable by a processor of a communication device, the processor interconnected with a memory and a network interface, for performing the above method.

According to a further aspect of the specification, a communication device is provided, comprising: a memory for storing communication handling preferences including a plurality of criteria and, for each criterion, a corresponding indication of acceptable modes of communication; a network interface; and a processor interconnected with the memory and the network interface, the processor configured to: receive an incoming communication via the network interface; select one of the criteria based on a context of the communication device; determine if a mode of the incoming communication matches the one or more indication; when the determination is affirmative, allow the incoming communication; and when the determination is negative, suppress the communication and transmit a message to an originator of the incoming communication, identifying an acceptable mode of communication.

### BRIEF DESCRIPTIONS OF THE DRAWINGS

Embodiments are described with reference to the following figures, in which:
Figure 1 depicts a communications system, according to a non-limiting embodiment;
Figure 2 depicts communication handling preferences for use in the system of Figure 1, according to a non-limiting embodiment;
Figure 3 depicts a method of handling communications, according to a non-limiting embodiment;
Figure 4 depicts a message sent during the performance of the method of Figure 3, according to a non-limiting embodiment;
Figure 5 depicts a message sent during the performance of the method of Figure 3, according to another non-limiting embodiment;
Figure 6 depicts a further method of handling communications, according to another non-limiting embodiment;
Figure 7 depicts communication handling preferences for use in the system of Figure 1, according to another non-limiting embodiment; and
Figure 8 depicts a communications system, according to another non-limiting embodiment.

### DETAILED DESCRIPTION OF THE EMBODIMENTS

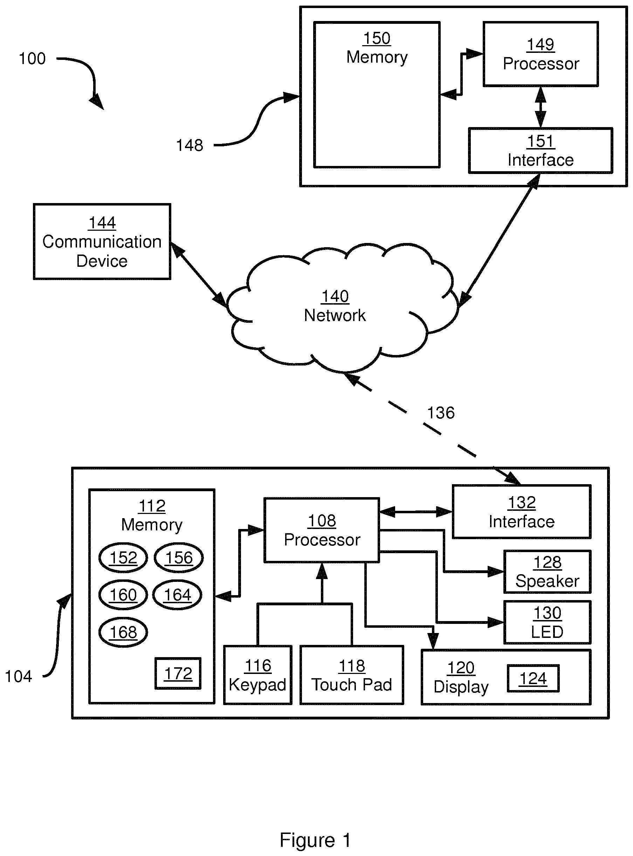

Figure 1 depicts a communications system 100. System 100 includes a communication device 104, which in the present example is based on the computing environment and functionality of a hand-held wireless communication device. Communication device 104 is not limited to a hand-held wireless communication device, however. Other devices are also contemplated, such as cellular telephones, smart telephones, Personal Digital Assistants ("PDAs"), media (e.g. MP3) players, laptop computers, tablet computers and the like. In other examples, communication device 104 can be substituted by a computing device such as a desktop computer.

Communication device 104 includes a processor 108 interconnected with a non-transitory computer readable storage medium such as a memory 112. Memory 112 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. In the present example, memory 112 includes both a volatile memory and a non-volatile memory. Other types of non-transitory computer readable storage medium are also contemplated, such as compact discs (CD-ROM, CD-RW) and digital video discs (DVD).

Communication device 104 also includes one or more input devices interconnected with processor 108. Such input devices are configured to receive input and provide data representative of such input to processor 108. Input devices can include, for example, a keypad 116 and a touch pad 118. Thus, keypad 116 can receive input in the form of the depression of one or more keys, and can then provide data representative of such input to processor 108. The data provided to processor 108 can be, for example, an American Standard Code for Information Interchange (ASCII) value for each of the depressed keys. Keypad 116 can be a full QWERTY keypad, a reduced QWERTY keypad or any other suitable arrangement of keys. Touch pad 118 can receive input in the form of depression of touch pad 118 or swipe gestures along the surface of touch pad 118, and can then provide data representative of such input to processor 108 in the form of, for example, coordinates representing the location of a virtual cursor, the direction and/or velocity of a swipe gesture, and the like.

In some examples, communication device 104 can include additional input devices in the form of one or more microphones, buttons, light sensors and the like (not shown). More generally, any suitable combination of the above-mentioned input devices can be incorporated into communication device 104.

Communication device 104 further includes one or more output devices. The output devices of communication device 104 include a display 120. Display 120 includes display circuitry 124 controllable by processor 108 for generating interfaces which include representations of data and/or applications maintained in memory 112. Display 120 includes a flat panel display comprising any one of, or any suitable combination of, a Liquid Crystal Display (LCD), a plasma display, an Organic Light Emitting Diode (OLED) display, and the like. Circuitry 124 can thus include any suitable combination of display buffers, transistors, LCD cells, plasma cells, phosphors, LEDs and the like. When the input devices of communication device 104 include a touch screen input device, the touch screen (not shown) can be integrated with display 120.

The output devices of communication device 104 can also include a speaker 128 interconnected with processor 108. Additional output devices are also contemplated including, for example, a light-emitting indicator in the form of a Light-Emitting Diode (LED) 130, and a motor or other mechanical output device (not shown) for causing communication device 104 to vibrate. In general, communication device 104 can include any suitable combination of the above-mentioned output devices, and may also include other suitable output devices.

Communication device 104 also includes a network interface 132 interconnected with processor 108. Network interface 132 allows communication device 104 to communicate with other computing devices via a link 136 and a network 140. Network 140 can include any suitable combination of wired and/or wireless networks, including but not limited to a Wide Area Network (WAN) such as the Internet, a Local Area Network (LAN), cell phone networks, WiFi networks, WiMax networks and the like. Link 136 is compatible with network 140. In particular, link 136 can be a wireless link based on any of the Global System for Mobile communications (GSM), General Packet Radio Service (GPRS), Enhanced Data rates for GSM Evolution (EDGE), third and fourth-generation mobile communication system (3G and 4G), Institute of Electrical and Electronic Engineers (IEEE) 802.11 (WiFi) or other wireless protocols or standards. Link 136 can also include any base stations and backhaul links necessary to connect communication device 104 to network 140.

Network interface 132 can also allow communication device 104 to communicate with other computing devices via a local link (not shown), such as a Bluetooth™ link.

Network interface 132 is selected for compatibility with link 136 and network 140, as well as with local links such as Bluetooth™. Network interface 132 thus includes one or more transmitter/receiver assemblies, or radios, and associated circuitry. For example, network interface 132 can include a first assembly, or radio, for enabling communications over a WiFi network, and a second radio for enabling communications over one or more mobile telephone networks (e.g. 3G networks). In other embodiments, link 136 can be a wired link, such as an Ethernet link, and interface 132 can include suitable hardware for communicating over such a link.

Communication device 104 can receive communications from, and send communications to, other communication devices over link 136 and network 140. For example, system 100 can include a second communication device 144 and a server 148 connected with network 140 (as noted above, communication device 144 can also be connected to communication device 104 via a local link rather than, or in addition to, link 136 and network 140). Server 148 can include a processor 149 interconnected with a memory 150 and a network interface 151. Memory 150 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. In the present example, memory 112 includes both a volatile memory and a non-volatile memory. Network interface 151 can include any suitable hardware necessary to communicate over network 140, such as an Ethernet adapter.

The nature of communications between communication device 104 and other computing devices is not particularly limited, and can include, for example, telephone calls, emails, Short Message Service (SMS) messages, Instant Message (IM) messages, and the like. For example, communication device 144 may place voice calls to device 104, or server 148 may be configured to host an email account associated with device 104. In such cases, server 148 transmits email messages received from other devices (such as device 144) to device 104.

The various components of communication device 104 are contained within a housing (not shown) comprising any suitable combination of materials (e.g. aluminum, plastics, and the like). The components of communication device 104 are interconnected via a communication bus (not shown). Communication device 104 can be powered by a battery (not shown) contained within the housing, though it will be understood that communication device 104 can also be supplied with electricity by a wired connection to a wall outlet or other power source, for example when docked. In other embodiments, where communication device 104 is in the form of a desktop computer for example, certain components need not be contained within the same housing. For example, display 120 can be housed separately from an enclosure housing processor 108 and memory 112. As a further example, keypad 116 can be replaced or supplemented by a keyboard which is housed separately from the enclosure housing processor 108 and memory 112.

Communication device 104 maintains, in memory 112, a plurality of computer readable instructions executable by processor 108. Such instructions include, for example, an operating system and one or more other applications. For example, as illustrated in Figure 1, memory 112 stores a communication handling application 152. In the present example, handling application 152 is part of the operating system, although it is contemplated that handling application can also be a separate, standalone application. In addition, memory 112 stores a plurality of communication applications, including an email application 156, an instant messaging application 160, an SMS application 164, and a voice call application 168. Other applications will now also occur to those skilled in the art. In addition, memory 112 stores a set of communication handling preferences 172 for use by application 152, as will be discussed in greater detail below.

When processor 108 executes the computer readable instructions of any of the applications stored in memory 112, processor 108 is configured to perform various functions implemented by those computer readable instructions, as will be discussed below in greater detail. Examples of the functions performed by processor 108, in conjunction with the other components of device 104, include sending and receiving email via the execution of application 156, making and receiving telephone calls, whether traditional Public Switched Telephone Network (PSTN) and Public Land Mobile Network (PLMN) or Voice over Internet Protocol (VoIP) via the execution of application 168, and the like.

An additional function performed by processor 108, via the execution of handling application 152, is the handling of communications before the invocation of one of the communication applications mentioned above. As will be seen below, "handling" includes receiving communications and acting upon those communications, either by launching the appropriate communications application (e.g. email application 156) or by generating a response to the communications without necessarily launching the appropriate communications application. The handling of communications by application 152 is achieved in conjunction with the handling preferences 172.

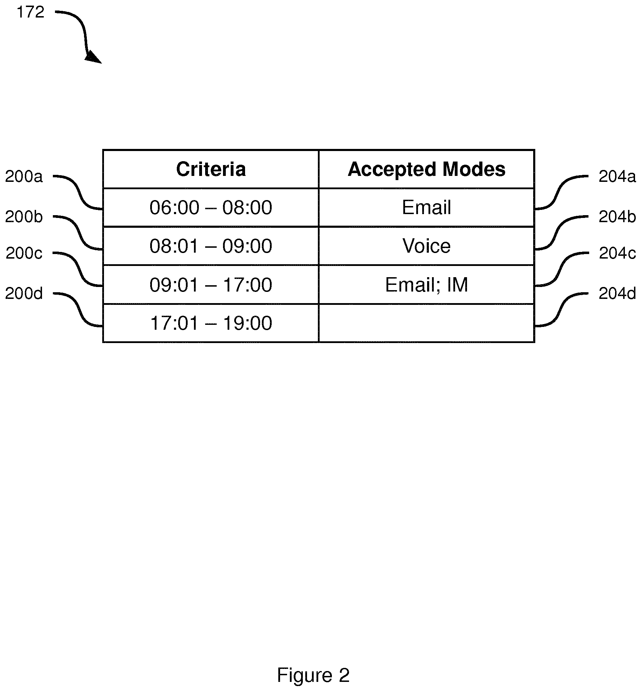

Turning now to Figure 2, an example of handling preferences 172 is shown. Although preferences 172 is shown in tabular format for ease of illustration, it is contemplated that any suitable format may be used to store preferences 172.

Preferences 172 includes a plurality of criteria 200a, 200b, 200c and 200d (generically referred to as criteria 200), and for each criterion, a corresponding indication 204a, 204b, 204c, 204d (generically referred to as indications 204) of accepted modes of communication. In the example of Figure 2, criteria 200 are time-based criteria, although it is contemplated that other types of criteria can also be used, as will be discussed below. In other words, as will be seen below, indications 204 are applied at certain times of day, defined by criteria 200. Indications 204 identify modes of communication which are accepted when the corresponding criteria 200 apply.

Thus, in the present example, between the hours of 6am and 8am, as defined by criterion 200a and corresponding indication 204a, email is the only communication mode accepted at device 104. Between the hours of 8am and 9am, as defined by criterion 200b and corresponding indication 204b, voice calls are the only communication mode accepted at device 104. Between the hours of 9am and 5pm, as defined by criterion 200c and corresponding indication 204c, email and instant messages are the only modes of communication accepted at device 104. Finally (although it will now be apparent that a larger number of criteria 200 and indications 204 can be present in other examples), between the hours of 5pm and 7pm, as defined by criterion 200d, indication 204d is blank and therefore no modes of communication are accepted at device 104.

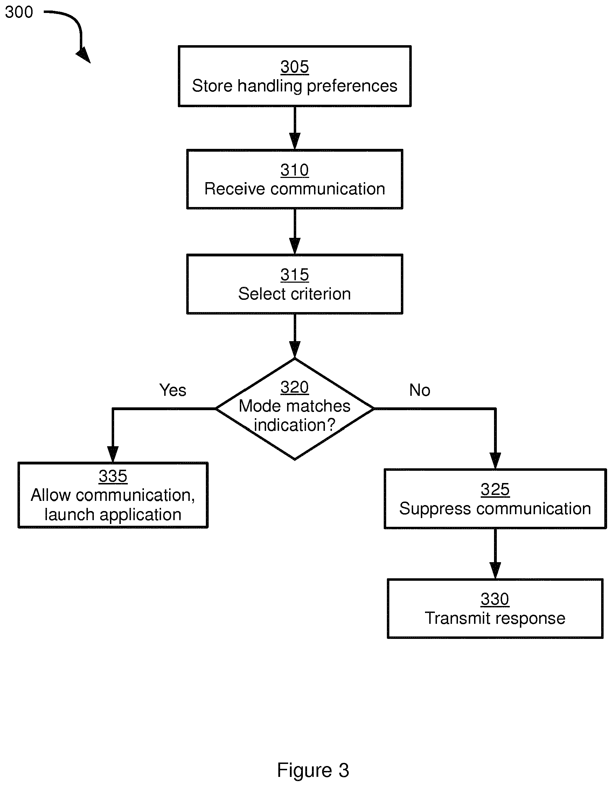

The implementation of acceptance and rejection of communications according to preferences 172 will now be discussed. Turning to Figure 3, a flowchart is shown illustrating a method 300 of handling communications. Method 300 will be discussed in conjunction with its performance on device 104, although it is contemplated that method 300 can also be performed on other suitable computing devices. More specifically, in the present example performance of method 300, the blocks of method 300 are performed by processor 108, during the execution of application 152. Processor 108, during such execution, is also configured to interact with other components of device 104 as needed, as will become apparent below.

Beginning at block 305, processor 108 is configured to store handling preferences 172 in memory 112. For the present example performance of method 300, it will be assumed that preferences 172 are as shown in Figure 2. The storage of preferences 172 in memory 112 can be accomplished in a variety of ways. For example, preferences 172 can be received at processor 108 prior to storage from an input device such as keypad 116. In other examples, preferences 172 can be received at processor 108 for storage via network interface 132, having been sent to device 104 through network 140 by another device, such as server 148. As will be discussed in further detail below, preferences 172 can also be stored at another computing device connected to network 140 instead of at device 104. For example preferences 172 can be stored at server 148.

The performance of method 300 continues at block 310, at which processor 108 is configured to receive a communication. The communication is received at processor 108 from network interface 132, which in turn received the communication via network 140, or via a local link, from another device. In the present example performance of method 300, it will be assumed that the incoming communication received at block 310 is a VoIP call from device 144.

At block 315, processor 108 is configured to select a criterion from criteria 200. Which of criteria is selected at block 315 is determined based on the context of device 104. In the present example, as criteria 200 are based on the time of day, the relevant context of device 104 is the time of day. Thus, at block 315, processor 108 is configured to obtain the current time (for example, from a clock maintained by processor 108) and to select the one of criteria 200 that match the current time. For the present example performance of method 300, it will be assumed that the time of day is 7:30am. Therefore, processor 108 selects criterion 200a at block 315, as 7:30am falls within the range specified by criterion 200a.

Proceeding then to block 320, processor 108 is configured to determine whether the mode of the communication received at block 310 matches the mode specified by the indication 204 corresponding to the selected criterion 200. Thus, in the present example, processor 108 is configured to determine whether the mode of the incoming voice call matches indication 204a, which specifies that email is the only accepted mode of communication.

It is contemplated that the performance of block 320 includes determining the mode of the communication received at block 310. The actions taken by processor 108 to determine the mode of the incoming communication's are not particularly limited. For example, processor 108 can be configured to inspect the incoming communication for headers or other data that is particular to specific protocols. For example, processor 108 can be configured to detect email headers, such as those specified in Internet Engineering Task Force (IETF) Request For Comments (RFC) 5322, and the like in the incoming communication.

In the present example performance, processor 108 is configured to detect a Session Initiation Protocol (SIP) INVITE message in the incoming communication, and to thereby determined that the incoming communication is a VoIP call. Having determined that the communication received at block 310 is a VoIP call (corresponding to the mode "voice" shown in Figure 2), processor 108 is configured to then determine whether the mode of the communication matches indication 204a. In the present example, as seen in Figure 2, the determination at block 320 is negative, because the mode of the incoming communication, "voice", does not match the mode identified by indication 204a ("email").

Following a negative determination at block 320, the performance of method 300 proceeds to block 325. At block 325, processor 108 is configured to suppress the incoming communication received at block 310. In general, by suppressing the communication, processor 108 will not generate any alerts via the output devices of device 104 indicating that the communication has been received. Thus, for example, the call received at block 310 may be accepted (leading to the launch of application 168), but any ring tone or other alert would be silenced by processor 108. In other examples, the alert may be modified to be less intrusive - for example, rather than play a ring tone via speaker 128, processor 108 may cause LED 130 to flash. In still other examples, suppression can include redirecting the call to a voicemail service without launching application 168, or simply rejecting the call without launching application 168.

The specific actions taken by processor 108 to suppress a communication can also depend on the mode of the communication. For example, if the communication received at block 310 was an email message, an instant message, a text (e.g. SMS) message or the like, the message can simply be dropped (that is, deleted). In other examples, processor 108 can save the email message in association with the relevant application (that is, application 156 for an email) without generating a notification message that would lead to an alert being generated by the output devices of device 104.

Processor 108 is then configured, at block 330 of method 300, to generate and transmit a response to the originator (which in the present example performance of method 300 is device 144, as mentioned above) of the communication received at block 310. The message transmitted at block 330 can identify one or more acceptable modes of communication, as specified by indication 204a. More generally, the message can include one or more of the modes of communication identified by the indication used in the determination at block 320.

It will now be apparent to those skilled in the art that in some cases, such as with criterion 200d and indication 204d, no acceptable modes of communication exist. In such cases, the message transmitted at block 330 can include a statement that device 104 is currently not accepting any communications.

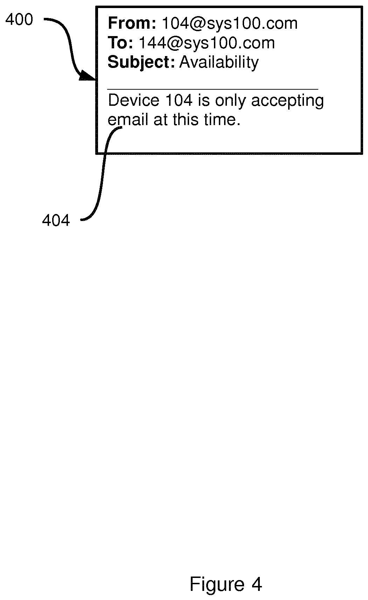

Returning to the present example performance of method 300, the message generated at block 330 therefore includes an identification of email as an acceptable communication mode. For example, the message can itself be an email message containing a predetermined subject line and a predetermined body (both of which can be stored in memory 112). A communication mode identifier from indication 204a is inserted into the body. Figure 4 shows a simplified example 400 of such a message. As seen in Figure 4, the body of message 400 includes an identifier 404 corresponding to indication 204a.

Although the response message discussed above is an email message, the nature of the response message is not particularly limited. For example, SMS messages, outgoing voice calls, and other types of messages can all be used at block 330. In some embodiments, processor 108 can be configured to select a communication mode for the response message generated at block 330 that matches the mode of the incoming communication received at block 310.

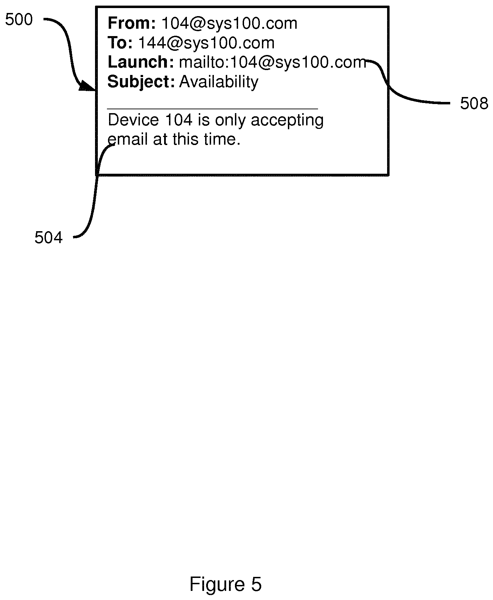

The message transmitted at block 330 can also include an instruction to the originator of the communication (device 144). The instruction can be an instruction for causing device 144 to automatically launch a communication application corresponding to the communication mode identified in the message. For example, message 400 shown in Figure 4 can include an instruction, such as a specific string that device 144 is configured to recognize, to launch an email application stored at device 144. The instruction can also include an instruction to not only launch the application, but to initiate a communication to device 104 in that application. Thus, referring to Figure 5, a modified example of message 400 is shown in the form of message 500. Message 500 includes an identifier 504 similar to identifier 404 discussed above. Message 500, however, also includes an instruction 508 in the form of a custom "launch" header. Upon receipt of message 500, device 144 can be configured to automatically launch an email application and open a new message addressed to device 104.

Returning briefly to block 320 of method 300, when the determination at block 320 is affirmative (that is, when the mode of the incoming communication does match one of the modes specified in the indication 204 corresponding to the criterion selected at block 315), processor 108 is configured to perform block 335. At block 335, processor 108 is configured to allow the communication received at block 310. Allowing the communication can include launching the communication application designated for processing communications having the same mode as the communication received at block 310. Thus, an incoming voice call deemed acceptable at block 320 would lead to the launch of voice call application 168 at block 335. Following the launch of application 168, the call would proceed in the conventional manner.

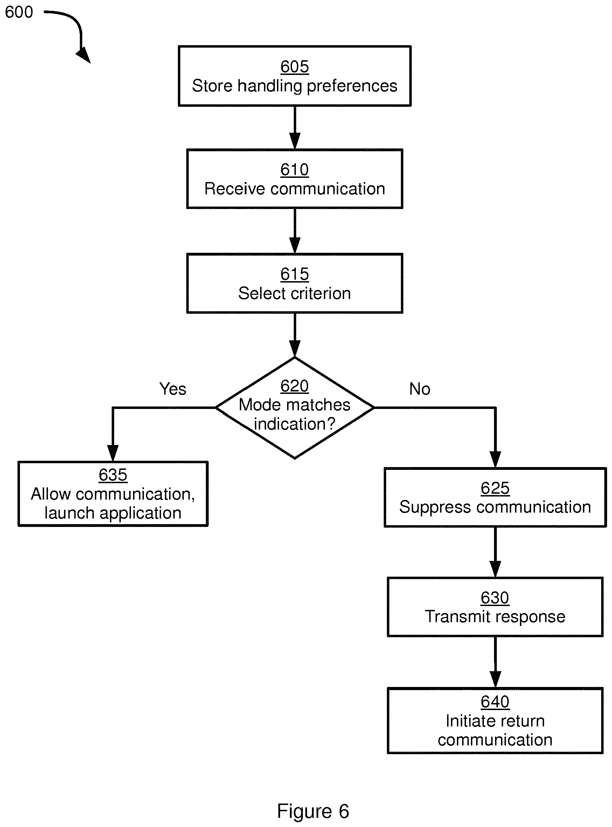

Turning now to Figure 6, a flowchart is shown illustrating a method 600 of handling communications at device 104. The performance of method 600 will be discussed in conjunction with its performance on device 104, via the execution of application 152 by processor 108. Blocks 605, 610, 615, 620, 625, 630 and 635 of method 600 are performed as described above in connection with blocks 305, 310, 315, 320, 325, 330 and 335, respectively. Method 600, however, includes an additional block following the transmission of a response message at block 630.

At block 640, processor 108 is configured to automatically initiate a return communication to the originator of the communication received at block 610. To perform block 640, processor 108 is configured to launch an application corresponding to a mode of communication indicated as being acceptable according to preferences 172. Thus, following from the example above in which criterion 200a was selected, at block 640 processor 108 is configured to launch email application 156 (because indication 204a identifies email as an acceptable mode of communication). Additionally, upon launching email application 156, processor 108 can automatically open a new message with the addressee field (that is, the "To:" field) populated with the address of device 144.

In other performances of method 600, the nature of the communication initiated at block 640 varies based on the criteria 200 selected at block 620 and the corresponding indication 204. For example, if an email were received between 8am and 9am, processor 108 is configured to perform block 640 by launching voice call application 168 (see indication 204b in Figure 2) and initiating a call to device 144.

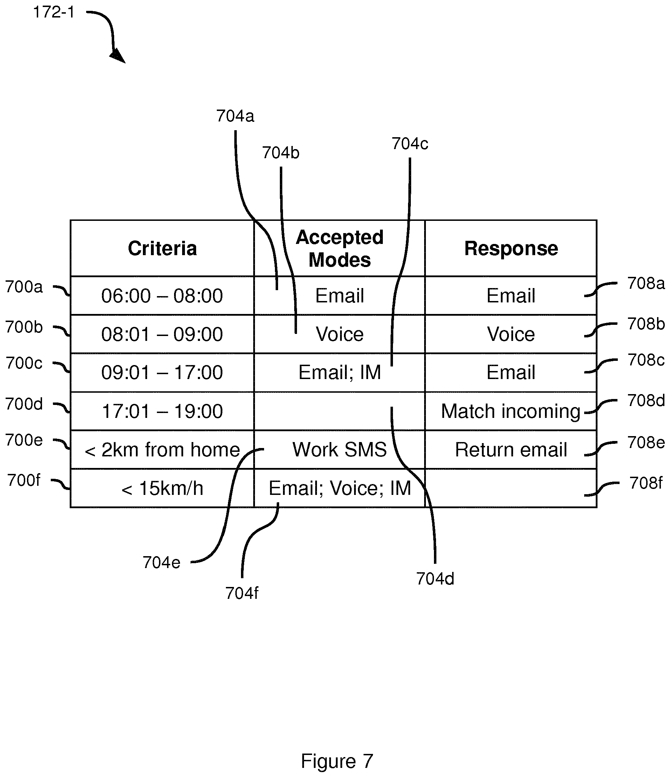

It is contemplated that preferences 172 can be more complex than the example shown in Figure 2. Turning now to Figure 7, a modified version 172-1 of preferences 172 is shown. Preferences 172-1 include criteria 700a, 700b, 700c, and 700d, along with corresponding indications 704a, 704b, 704c, and 704d. These criteria and indications are as described above in connection with Figure 2. However, preferences 172-1 also include additional criteria 700e and 700f, along with corresponding indications 704e and 704f. Criterion 700e specifies a geographical range instead of a time period. In particular, criterion 700e defines a region that is within a two-kilometre radius of a "home" location. The home location can be predetermined and stored in memory 112, or in criterion 700e itself. For example, the location can be stored as a base station cell identifier, a set of GPS coordinates, and the like.

Criterion 700f, meanwhile, specifies a velocity rather than a time period or a geographical range. In particular, criterion 700f applies when the current velocity of device 104 is below fifteen kilometres per hour. Processor 108 can be configured to obtain a current velocity using a GPS signal.

It will therefore be apparent from the above that the context of device 104 to which criteria 700 relate is not limited to time periods. Indeed, additional criteria such as altitude, barometric pressure, temperature and the like can be used as criteria. In some embodiments, time periods or other criteria can be derived from other data at device 104. For example, instead of a time period of 9am to 5pm, a criterion (not shown) can define any time period that not only falls between 9am and 5pm, but also falls during a time coinciding with an event stored in connection with a calendar application at device 104. In other words, criteria can be dynamic, dependent on the contents of a calendar or other data at device 104.

It is contemplated that when criteria relating to different types of device context (such as time of day and location) are stored in preferences 172-1, conflicts between criteria may arise. For example, when device 104 is travelling at ten kilometres per hour and the time is 8:30am, criteria 700b and 700f are both eligible for selection at blocks 320 or 620. Thus, processor 108 can be configured to select one of the criteria matching the current context of device 104 according to a hierarchy. Such a hierarchy can be stored in memory 112 and can indicate that, for example, location-based criteria take precedence over time-based criteria.

Further variations are also contemplated in connection with indications 204 and 704. For example, in addition to specifying modes of communication such as email, voice and the like, the indications can specify acceptable attributes of communications falling within those modes. For example, indication 704e indicates that SMS messages from work are acceptable, meaning that messages originating from contacts tagged as "work" contacts in an address book application (not shown) at device 104 are acceptable. In other words, SMS messages from contacts that are not tagged or otherwise categorized as work contacts would not be acceptable. In other examples, an indication can specify that only incoming email messages including a high priority flag, specific text strings, specific originator addresses, and the like, are acceptable. More generally, indications 204 and 704 can define acceptable modes of communication, and acceptable attributes within those modes of communication.

Still referring to Figure 7, preferences 172-1 can also include response definitions 708a, 708b, 708c, 708d, 708e, and 708f (generically referred to as response definitions 708) each corresponding to a criterion 700 and an indication 704. Response definitions 708 define the actions to be taken by processor 108 at blocks 330 and 630. Thus, for example, definition 708c indicates that the response message sent at block 330 is an email message. As a further example, definition 708d specifies that the response message sent at block 330 must be of the same type as the incoming communication received at block 310.

Although not shown in Figure 7, preferences 172-1 can also include data defining the actions to be taken by processor 108 at block 640 (that is, defining which communication application to launch at device 104).

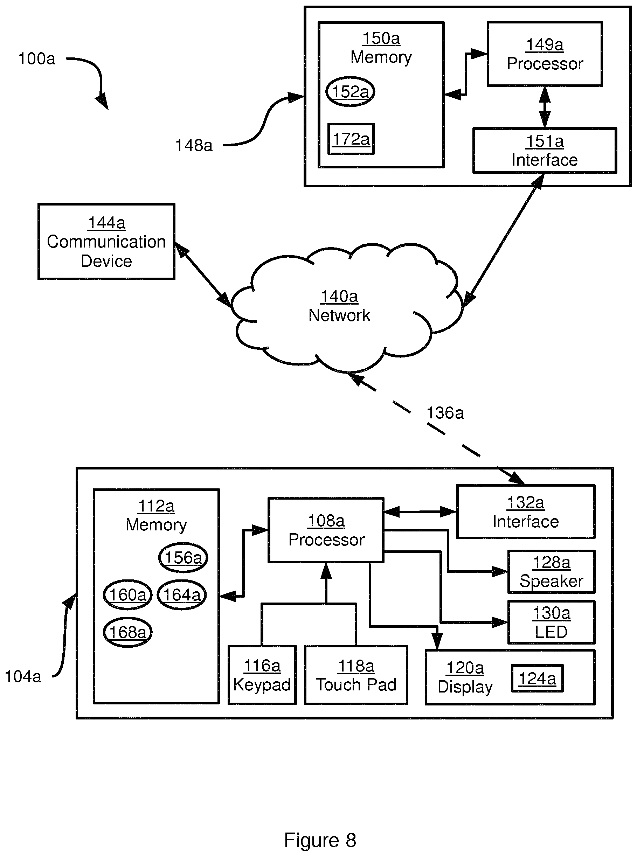

Variations to the above are contemplated. In some embodiments, server 148 can be configured to handle communications for device 104. Referring to Figure 8, a system 100a is shown, comprising a device 104a connected to a device 144a and a server 148a via a network 140a and a link 136a. Elements of system 100a which are similar to elements of system 100 bear the same reference numbers as the elements of system 100 to which they are similar, but with the suffix "a". Thus, processor 108a, memory 112a, keypad 116a, touch pad 118a, display 120a and circuitry 124a, speaker 128a, LED 130a and network interface 132a are as described above in connection with system 100. Likewise, processor 149a, memory 150a and network interface 151a of server 148a are as described above in connection with system 100. Certain exceptions to the similarity between system 100 and system 100a are discussed below.

In system 100a, application 152a and preferences 172a (or preferences 172-1) are stored at server 148a rather than at device 104a. All incoming communications addressed to device 104a can be received at server 148a prior to transmission to device 104a. The performance of blocks 305-330 and 605-630 can therefore be performed by processor 149a of server 148a, via the execution of application 152a, instead of by device 104a. Device 104a can be configured to transmit contextual data (e.g. location, velocity and the like) to server 148a periodically to allow server 148a to perform the determinations at block 320 and 620. In system 100a, block 640 can be performed partially by server 148a - server 148a can transmit an instruction to device 104a to initiate a communication. Device 104a, in turn, can receive the instruction from server 148a and initiate the communication as discussed above.

In still other embodiments, server 148a can be replaced by a plurality of servers in a cloud arrangement.

It is contemplated that additional options are available for suppressing communications at blocks 325 and 625 when server 148 handles the application of preferences 172 and 172-1. For example, suppression can include holding messages (e.g. emails) at server 148 without delivering them to device 104.

Those skilled in the art will appreciate that in some embodiments, the functionality of processor 108 executing application 152 can be implemented using pre-programmed hardware or firmware elements (e.g., application specific integrated circuits (ASICs), electrically erasable programmable read-only memories (EEPROMs), etc.), or other related components.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method (300; 600) in a mobile communication device (104) having a processor (108), a network interface (132), and a non-transitory memory (112), the method comprising:
storing (305; 605), in the non-transitory memory (112), communication handling preferences (172), the communication handling preferences including a plurality of criteria (200; 700a-700d) each defining a time period and, for each criterion (200; 700a-700d), a corresponding indication (204; 704a-704d) of at least one of a plurality of acceptable modes of Incoming data communication and a corresponding indication (708) of a response mode of communication, the communication handling preferences (172) further Including another criteria (700e) defining a geographic range, and for the another criteria, a corresponding indication (704e) of at least one of a plurality of acceptable modes of incoming data communication and a corresponding indication (708e) of a response mode of communication;
receiving (310; 610) an incoming data communication at the processor (108) via the network interface (132);
determining a current location of the mobile communication device;
selecting (315, 615), at the processor (108), one of the criteria (200; 700a-700d) defining a time period that matches a current time of day of the mobile communication device (104) and the another criteria (700e) defining a geographic range that matches the current location of the mobile communication device as the selected criterion according to a hierarchy stored in the non-transitory memory, the hierarchy indicating whether time-based criteria take precedence over location-based criteria;
determining (320; 620), at the processor (108), if a mode of the incoming data communication matches the indication (204) of an acceptable mode corresponding to the selected criterion (200; 700a-700d);
when the determination is affirmative, allowing (335, 635) the incoming data communication; wherein, when the determination is negative, the method comprises:
suppressing (325; 625) the incoming data communication;
transmitting (330; 630) a message to an originator device of the incoming data communication using the response mode of communication corresponding to the selected criterion (200; 700a-700d), the message identifying the acceptable mode of communication corresponding to the selected criterion, wherein the message includes an instruction to the originator device to initiate a new communication having the acceptable mode;
automatically launching an application to initiate a communication to the originator device, the application corresponding to the acceptable mode of communication corresponding to the selected criterion (200; 700a-700d); and
in response to transmitting the message to the originator device, receiving a new message from the originator device in the application corresponding to the acceptable mode.

2. The method (300; 600) of claim 1 wherein allowing the communication includes launching an application for handling the communication.

3. The method (300; 600) of claim 1 wherein the communication handling preferences include a further criteria defining a velocity.

4. A mobile communication device (104), comprising:
a non-transitory memory (112) for storing communication handling preferences (172), the communication handling preferences including a plurality of criteria (200; 700a-700d) each defining a time period and, for each criterion (200; 700a-700d), a corresponding indication (204; 704a-704d) of at least one of a plurality of acceptable modes of incoming data communication and a corresponding indication of a response mode (708a-708d) of communication, the communication handling preferences (172) further including another criteria (700e) defining a geographic range, and for the another criteria (700e), a corresponding indication (704e) of at least one of a plurality of acceptable modes of incoming data communication and a corresponding indication (708e) of a response mode of communication;
a network interface (132); and
a processor (108) interconnected with the non-transitory memory (112) and the network Interface (132), the processor (108) configured to:
receive an incoming data communication via the network interface (132);
determine a current location of the mobile communication device;
select one of the criteria (200; 700a-700d) defining a time period that matches a current time of day of the mobile communication device (104) and the another criteria (700e) defining a geographic range that matches the current location of the mobile communication device (104) as a selected criterion according to a hierarchy stored in the non-transitory memory (112), the hierarchy indicating whether time-based criteria take precedence over location-based criteria;
determine if a mode of the incoming data communication matches the indication (204; 704a-704e) of an acceptable mode corresponding to the selected criterion (200; 700a-700e);
when the determination is affirmative, allow the incoming data communication; wherein, when the determination is negative, the processor is configured to:
suppress the incoming data communication;
transmit a message to an originator device of the incoming data communication using the response mode of communication corresponding to the selected criterion (200; 700a-700e), the message identifying the acceptable mode of communication corresponding to the selected criterion, wherein the message includes an instruction to the originator device to initiate a new communication having the acceptable mode;
automatically launch an application to initiate a communication to the originator device, the application corresponding to the acceptable mode of communication corresponding to the selected criterion (200; 700a-700e); and
in response to transmitting the message to the originator device, receive a new message from the originator device in the application corresponding to the acceptable mode.

5. The mobile communication device (104) of claim 4 wherein allowing the communication includes launching an application (156, 160, 164, 168) for handling the communication.

6. The mobile communication device (104) of any one of claims 4 to 5 wherein the communication handling preferences include a further criteria defining a velocity.

7. A non-transitory computer readable medium storing computer readable instructions executable by a processor (108) of a mobile communication device (104), the processor (108) interconnected with a non-transitory memory (112) and a network interface (132), for performing the method of any one of claims 1 to 3.

## Patentansprüche

1. Verfahren (300; 600) in einer mobilen Kommunikationsvorrichtung (104) mit einem Prozessor (108), einer Netzwerkschnittstelle (132) und einem nicht-flüchtigen Speicher (112), wobei das Verfahren umfasst:
Speichern (305; 605) von Kommunikationshandhabungspräferenzen (172) in dem nicht-flüchtigen Speicher (112), wobei die Kommunikationshandhabungspräferenzen eine Vielzahl von Kriterien (200; 700a-700d), die jeweils einen Zeitraum definieren, und für jedes Kriterium (200; 700a-700d) eine entsprechende Angabe (204; 704a-704d) von mindestens einem von einer Vielzahl von annehmbaren Modi von eingehender Datenkommunikation und eine entsprechende Angabe (708) eines Antwortmodus der Kommunikation einschließen, wobei die Kommunikationshandhabungspräferenzen (172) ferner andere Kriterien (700e), die einen geographischen Bereich definieren, und für die anderen Kriterien eine entsprechende Angabe (704e) von mindestens einem von einer Vielzahl annehmbarer Modi von eingehender Datenkommunikation und eine entsprechende Angabe (708e) eines Antwortmodus der Kommunikation einschließen;
Empfangen (310; 610) einer eingehenden Datenkommunikation an dem Prozessor (108) über die Netzwerkschnittstelle (132);
Ermitteln eines aktuellen Standorts der mobilen Kommunikationsvorrichtung;
Auswählen (315, 615) eines der Kriterien (200; 700a-700d) an dem Prozessor (108), die einen Zeitraum definieren, der zu einer aktuellen Tageszeit der mobilen Kommunikationsvorrichtung (104) passt, und der anderen Kriterien (700e), die den geographischen Bereich definieren, der zu dem aktuellen Standort der mobilen Kommunikationsvorrichtung passt, als ausgewähltes Kriterium gemäß einer in dem nicht-flüchtigen Speicher gespeicherten Hierarchie, wobei die Hierarchie angibt, ob zeitbasierte Kriterien gegenüber standortbasierten Kriterien den Vorrang haben;
Ermitteln (320; 620) an dem Prozessor (108), ob ein Modus der eingehenden Datenkommunikation zu der Angabe (204) eines annehmbaren Modus entsprechend dem ausgewählten Kriterium (200; 700a-700d) passt;
wenn die Ermittlung positiv verläuft, Zulassen (335, 635) der eingehenden Datenkommunikation;
wobei das Verfahren, wenn die Ermittlung negativ verläuft, umfasst:
Unterdrücken (325; 625) der eingehenden Datenkommunikation;
Übertragen (330; 630) einer Nachricht an eine Absendevorrichtung der eingehenden Datenkommunikation unter Verwendung des Antwortmodus der Kommunikation entsprechend dem ausgewählten Kriterium (200; 700a-700d), wobei die Nachricht den annehmbaren Kommunikationsmodus entsprechend dem ausgewählten Kriterium identifiziert, wobei die Nachricht eine Anweisung an die Absendevorrichtung einschließt, eine neue Kommunikation mit dem annehmbaren Modus zu initiieren;
automatisches Starten einer Applikation, um eine Kommunikation mit der Absendevorrichtung zu initiieren,
wobei die Applikation dem annehmbaren Kommunikationsmodus entsprechend dem ausgewählten Kriterium (200; 700a-700d) entspricht; und
in Reaktion auf das Übertragen der Nachricht an die Absendevorrichtung Empfangen einer neuen Nachricht von der Absendevorrichtung in der Applikation, die dem annehmbaren Modus entspricht.

2. Verfahren (300; 600) nach Anspruch 1, wobei Zulassen der Kommunikation Starten einer Applikation zur Handhabung der Kommunikation einschließt.

3. Verfahren (300; 600) nach Anspruch 1, wobei die Kommunikationshandhabungspräferenzen weitere Kriterien einschließen, die eine Geschwindigkeit definieren.

4. Mobile Kommunikationsvorrichtung (104), umfassend:
einen nicht-flüchtigen Speicher (112) zum Speichern von Kommunikationshandhabungspräferenzen (172), wobei die Kommunikationshandhabungspräferenzen eine Vielzahl von Kriterien (200; 700a-700d) einschließen, die jeweils einen Zeitraum definieren, und für jedes Kriterium (200; 700a-700d) eine entsprechende Angabe (204; 704a-704d) von mindestens einem von einer Vielzahl von annehmbaren Modi von eingehender Datenkommunikation und einer entsprechenden Angabe eines Antwortmodus (708a-708d) der Kommunikation, wobei die Kommunikationshandhabungspräferenzen (172) ferner andere Kriterien (700e), die einen geographischen Bereich definieren, und für die anderen Kriterien eine entsprechende Angabe (704e) von mindestens einem von einer Vielzahl annehmbarer Modi von eingehender Datenkommunikation und einer entsprechenden Angabe (708e) eines Antwortmodus der Kommunikation einschließen;
eine Netzwerkschnittstelle (132); und
einen Prozessor (108), der mit dem nicht-flüchtigen Speicher (112) und der Netzwerkschnittstelle (132) verschaltet ist, wobei der Prozessor (108) konfiguriert ist zum:
Empfangen von eingehender Datenkommunikation über die Netzwerkschnittstelle (132);
Ermitteln eines aktuellen Standorts der mobilen Kommunikationsvorrichtung;
Auswählen eines der Kriterien (200; 700a-700d), die einen Zeitraum definieren, der zu einer aktuellen Tageszeit der mobilen Kommunikationsvorrichtung (104) passt, und der anderen Kriterien (700e), die den geographischen Bereich definieren, der zu dem aktuellen Standort der mobilen Kommunikationsvorrichtung (104) passt, als ausgewähltes Kriterium gemäß einer in dem nicht-flüchtigen Speicher (112) gespeicherten Hierarchie, wobei die Hierarchie angibt, ob zeitbasierte Kriterien gegenüber standortbasierten Kriterien den Vorrang haben;
Ermitteln, ob ein Modus der eingehenden Datenkommunikation zu der Angabe (204; 704a-704e) eines annehmbaren Modus entsprechend dem ausgewählten Kriterium (200; 700a-700e) passt;
wenn die Ermittlung positiv verläuft, Zulassen der eingehenden Datenkommunikation;
wobei der Prozessor, wenn die Ermittlung negativ verläuft, konfiguriert ist zum:
Unterdrücken der eingehenden Datenkommunikation;
Übertragen einer Nachricht an die Absendevorrichtung der eingehenden Datenkommunikation unter Verwendung des Antwortmodus der Kommunikation entsprechend dem ausgewählten Kriterium (200; 700a-700e), wobei die Nachricht den annehmbaren Kommunikationsmodus entsprechend dem ausgewählten Kriterium identifiziert,
wobei die Nachricht eine Anweisung an die Absendevorrichtung einschließt, eine neue Kommunikation mit dem annehmbaren Modus zu initiieren;
automatisches Starten einer Applikation, um eine Kommunikation mit der Absendevorrichtung zu initiieren,
wobei die Applikation dem annehmbaren Kommunikationsmodus entsprechend dem ausgewählten Kriterium (200; 700a-700e) entspricht; und
in Reaktion auf das Übertragen der Nachricht zu der Absendevorrichtung Empfangen einer neuen Nachricht von der Absendevorrichtung, die dem annehmbaren Modus entspricht.

5. Module Kommunikationsvorrichtung (104) nach Anspruch 4, wobei Zulassen der Kommunikation Starten einer Applikation (156, 160, 164, 168) zur Handhabung der Kommunikation einschließt.

6. Mobile Kommunikationsvorrichtung (104) nach einem der Ansprüche 4 bis 5, wobei die Kommunikationshandhabungspräferenzen weitere Kriterien einschließen, die eine Geschwindigkeit definieren.

7. Nicht-flüchtiges computerlesbares Medium, das computerlesbare Anweisungen speichert, die durch einen Prozessor (108) einer mobilen Kommunikationsvorrichtung (104) ausführbar sind, wobei der Prozessor (108) mit einem nicht-flüchtigen Speicher (112) und einer Netzwerkschnittstelle (132) verschaltet ist, um das Verfahren nach einem der Ansprüche 1 bis 3 auszuführen.

## Revendications

1. Procédé (300; 600) dans un dispositif de communication mobile (104) comportant un processeur (108), une interface réseau (132) et une mémoire non transitoire (112), le procédé comprenant :
le stockage (305 ; 605), dans la mémoire non transitoire (112), de préférences de gestion de communications (172), les préférences de gestion de communications comprenant une pluralité de critères (200 ; 700a-700d) définissant chacun une période horaire et, pour chaque critère (200 ; 700a-700d), une indication correspondante (204 ; 704a-704d) d'au moins un mode parmi une pluralité de modes acceptables de communication de données entrante et une indication correspondante (708) d'un mode de communication de réponse, les préférences de gestion de communications (172) comprenant en outre d'autres critères (700e) définissant une étendue géographique, et pour les autres critères, une indication correspondante (704e) d'au moins un mode parmi une pluralité de modes acceptables de communication de données entrante et une indication correspondante (708e) d'un mode de communication de réponse ;
la réception (310 ; 610) d'une communication de données entrante au niveau du processeur (108) par l'intermédiaire de l'interface réseau (132) ;
la détermination d'un emplacement actuel du dispositif de communication mobile ;
la sélection (315, 615), au niveau du processeur (108), de l'un des critères (200 ; 700a-700d) définissant une période horaire qui correspond à une heure actuelle de la journée du dispositif de communication mobile (104) et des autres critères (700e) définissant une étendue géographique qui correspond à l'emplacement actuel du dispositif de communication mobile à titre de critère sélectionné selon une hiérarchie stockée dans la mémoire non transitoire, la hiérarchie indiquant si les critères basés sur l'heure ont priorité sur les critères basés sur l'emplacement ;
la détermination (320 ; 620), au niveau du processeur (108), du point de savoir si un mode de la communication de données entrante correspond ou non à l'indication (204) d'un mode acceptable correspondant au critère sélectionné (200 ; 700a-700d) ;
quand la détermination est affirmative, l'autorisation (335, 635) de la communication de données entrante ;
dans lequel, quand la détermination est négative, le procédé comprend :
la suppression (325 ; 625) de la communication de données entrante ;
l'envoi (330 ; 630) d'un message à un dispositif d'origine de la communication de données entrante en utilisant le mode de communication de réponse correspondant au critère sélectionné (200 ; 700a-700d), le message identifiant le mode de communication acceptable qui correspond au critère sélectionné, le message contenant une instruction destinée au dispositif d'origine pour déclencher une nouvelle communication ayant le mode acceptable ;
le lancement automatique d'une application pour déclencher une communication avec le dispositif d'origine, l'application correspondant au mode de communication acceptable qui correspond au critère sélectionné (200 ; 700a-700d) ; et
en réponse à l'envoi du message au dispositif d'origine, la réception d'un nouveau message en provenance du dispositif d'origine dans l'application correspondant au mode acceptable.

2. Procédé (300 ; 600) selon la revendication 1, dans lequel l'autorisation de la communication comprend le lancement d'une application permettant de gérer la communication.

3. Procédé (300 ; 600) selon la revendication 1, dans lequel les préférences de gestion de communications comprennent des critères supplémentaires définissant une vitesse.

4. Dispositif de communication mobile (104), comprenant :
une mémoire non transitoire (112) pour stocker des préférences de gestion de communications (172), les préférences de gestion de communications comprenant une pluralité de critères (200 ; 700a-700d) définissant chacun une période horaire et, pour chaque critère (200 ; 700a-700d), une indication correspondante (204 ; 704a-704d) d'au moins un mode parmi une pluralité de modes acceptables de communication de données entrante et une indication correspondante (708a-708d) d'un mode de communication de réponse, les préférences de gestion de communications (172) comprenant en outre d'autres critères (700e) définissant une étendue géographique, et pour les autres critères, une indication correspondante (704e) d'au moins un mode parmi une pluralité de modes acceptables de communication de données entrante et une indication correspondante (708e) d'un mode de communication de réponse ;
une interface réseau (132) ; et
un processeur (108) interconnecté à la mémoire non transitoire (112) et à l'interface réseau (132), le processeur (108) étant configuré pour :
recevoir une communication de données entrante par l'intermédiaire de l'interface réseau (132) ;
déterminer un emplacement actuel du dispositif de communication mobile ;
sélectionner l'un des critères (200 ; 700a-700d) définissant une période horaire qui correspond à une heure actuelle de la journée du dispositif de communication mobile (104) et des autres critères (700e) définissant une étendue géographique qui correspond à l'emplacement actuel du dispositif de communication mobile (104) à titre de critère sélectionné selon une hiérarchie stockée dans la mémoire non transitoire (112), la hiérarchie indiquant si les critères basés sur l'heure ont priorité sur les critères basés sur l'emplacement ;
déterminer si un mode de la communication de données entrante correspond à l'indication (204 ; 704a-704e) d'un mode acceptable correspondant au critère sélectionné (200 ; 700a-700d) ;
quand la détermination est affirmative, autoriser la communication de données entrante ;
dans lequel, quand la détermination est négative, le processeur est configuré pour :
supprimer la communication de données entrante ;
envoyer un message à un dispositif d'origine de la communication de données entrante en utilisant le mode de communication de réponse correspondant au critère sélectionné (200 ; 700a-700d), le message identifiant le mode de communication acceptable qui correspond au critère sélectionné, le message contenant une instruction destinée au dispositif d'origine pour déclencher une nouvelle communication ayant le mode acceptable ;
lancer automatiquement une application pour déclencher une communication avec le dispositif d'origine, l'application correspondant au mode de communication acceptable qui correspond au critère sélectionné (200 ; 700a-700d) ; et
en réponse à l'envoi du message au dispositif d'origine, recevoir un nouveau message en provenance du dispositif d'origine dans l'application correspondant au mode acceptable.

5. Dispositif de communication mobile (104) selon la revendication 4, dans lequel l'autorisation de la communication comprend le lancement d'une application (156, 160, 164, 168) permettant de gérer la communication.

6. Dispositif de communication mobile (104) selon l'une quelconque des revendications 4 à 5, dans lequel les préférences de gestion de communications comprennent des critères supplémentaires définissant une vitesse.

7. Support non transitoire lisible par ordinateur stockant des instructions lisibles par ordinateur exécutables par un processeur (108) d'un dispositif de communication mobile (104), le processeur (108) étant interconnecté à une mémoire non transitoire (112) et à une interface réseau (132), pour mettre en oeuvre le procédé selon l'une quelconque des revendications 1 à 3.
